# FASCICULE DE BREVET EUROPEEN

(11) **EP 0 844 984 B1**
(45) Date de publication et mention de la délivrance du brevet: **03.08.2005**
(21) Numéro de dépôt: 97928346.2
(22) Date de dépôt: 13.06.1997
(51) Int. Cl.: C03C 3/097, C03C 4/00

(54) **COMPOSITIONS DE VERRES OPALINS**
OPALGLASZUSAMMENSETZUNGEN
OPAL GLASS COMPOSITIONS

(30) Priorité: 14.06.1996 FR 9607431
(43) Date de publication de la demande: 03.06.1998
(73) Titulaire: SAINT-GOBAIN EMBALLAGE, 92400 Courbevoie (FR)
(72) Inventeur: FOSSE, Lucien, F-76260 Etalondes (FR); AVISSE, Claude, F-80350 Mers les Bains (FR)
(74) Mandataire: Renous Chan, Véronique
(86) Numéro de dépôt international: PCT/FR1997/001059
(87) Numéro de publication internationale: WO 1997/047562

(56) Documents cités:
- WO-A-96/06052
- FR-A- 1 453 996
- FR-A- 2 221 410
- SU-A- 642 264
- US-A- 4 298 390
- US-A- 4 309 219
- US-A- 4 536 480
- DATABASE WPI Section Ch, Derwent Publications Ltd., London, GB; Class L01, AN 70-58936R XP002025711 & SU 254 738 A (GLASS RES INST)
- PATENT ABSTRACTS OF JAPAN vol. 011, no. 096 (C-412), 26 mars 1987 & JP 61 247642 A (SASAKI GLASS KK), 4 novembre 1986,

## Description

L'invention concerne des compositions de verres opalins, c'est-à-dire des compositions pour la réalisation d'articles ou substrats en verre opalin. De tels articles ou substrats sont notamment obtenus à partir de compositions conduisant à la formation de micro-cristaux répartis dans son épaisseur, conférant un aspect « nuagé » et « cotonneux » plus ou moins intense.

Les industries de la parfumerie et de la cosmétique sont de plus en plus demandeurs d'articles, tels que des flacons ou pots, réalisés en verre opalin. La réalisation de ces articles a notamment pour but de modifier la présentation des produits issus de ces industries, notamment d'un point de vue esthétique.

Si l'invention ne se limite pas à de telles applications, elle sera toutefois plus particulièrement décrite en référence aux applications visées par les industries de la parfumerie et/ou de la cosmétique, notamment afin d'en simplifier la compréhension.

Les inventeurs se sont ainsi donné pour mission de définir des compositions de verre pour la réalisation d'articles en verre opalin.

Les recherches ont conduit les inventeurs à réaliser de tels articles à partir de compositions de verre comportant notamment du fluor, élément susceptible d'assurer la germination de cristaux. Ces recherches ont permis de réaliser de tels articles présentant des parois opalines, non opaques, présentant une transmission lumineuse satisfaisante pour les applications envisagées. Par contre, des tests de vieillissement desdits articles dans des conditions de stockage semblables à celles qu'ils sont destinés à subir avant remplissage ont révélé différents problèmes.

Tout d'abord, il s'est avéré que des conditions de stockage dans une ambiance confinée, les articles subissant des variations de température et d'humidité, conduisent à la formation d'odeurs agressives et persistantes, du type odeur de vinaigre. La formation de telles odeurs est bien entendu totalement inacceptable pour les applications visées par les industries de la parfumerie et de la cosmétique.

D'autre part, les conditions de vieillissement testées ont également mis en évidence la formation d'un gel gras en surface du verre. La formation d'une telle pellicule grasse en surface nécessite avant remplissage un lavage et/ou un décapage des articles. Ces opérations conduisent à des coûts très importants et, de plus, doivent être mises en oeuvre par les industries de remplissage et non pas par le fabricant de récipients, ce qui rend également cet inconvénient inacceptable.

Durant leur analyse des problèmes qui viennent d'être évoqués, les auteurs de la présente invention ont su mettre en évidence l'origine supposée desdits problèmes. Il semblerait en effet que les compositions de verre utilisées ne présentaient pas une résistance hydrolytique suffisante.

L'invention a ainsi pour but des compositions de verres opalins présentant une résistance hydrolytique améliorée, au vu des résultats présentés.

Il est par ailleurs connu de réaliser des substrats en verre comportant des cristaux dans leur épaisseur conduisant à une opacité totale ; il s'agit de substrats obtenus à partir de compositions de verre opale. De telles compositions sont notamment décrites dans la demande de brevet WO-96/06052. Cette demande décrit notamment la substitution de composés à base de phosphore au lieu de composés à base de fluor, pour améliorer le coefficient de dilatation thermique.

Le but précédemment fixé est atteint selon l'invention par une composition de verre opalin du type borosilicate comprenant les constituants ci-après dans les limites pondérales suivantes :

| | |
|---|---|
| SiO₂ | 60 - 66 % |
| Na₂O | 9 - 13 % |
| K₂O | 1,5 - 2,5 % |
| CaO | 0,5 - 1,5 % |
| Al₂O₃ | 5 - 6 % |
| BaO | 2 - 3 % |
| Ce₂O | 0 - 0,1 % |
| B₂O₃ | 10 -12 % |
| ZnO | 0,5- 1,5 % |
| F | 0-1% |
| P₂O₅ | 1,5 - 3 % |

Les différentes compositions de verre utilisées correspondant à cette définition permettent en effet de réaliser des articles présentant notamment une résistance hydrolytique satisfaisante pour des applications telles que celles concernées par les industries de la parfumerie et/ou de la cosmétique. En effet, des flacons ou pots ne présentent, après un stockage dans des conditions telles que celles évoquées précédemment, aucune pellicule grasse ni aucune odeur pouvant nuire à leur utilisation ou nécessitant des étapes supplémentaires de nettoyage avant remplissage.

Par ailleurs, les compositions de verre, telles que définies, peuvent être fondues puis mises en oeuvre sans problème selon les techniques habituelles utilisées dans l'industrie de fabrication des flacons et pots notamment destinés aux industries de la parfumerie et de la cosmétique.

Le constituant principal et le plus important dans ces matrices verrières est SiO₂. La teneur en SiO₂ est comprise entre 60 % et 66 %. En deçà des limites inférieures, les compositions de verre selon l'invention deviennent très délicates à travailler et le formage des articles devient quasiment irréalisable. En revanche, au-dessus des limites supérieures, les compositions de verre deviennent difficiles à fondre.

La teneur en B₂O₃ est quant à elle comprise entre 10 % et 12 %. B₂O₃ intervient quelque peu sur la croissance des micro-cristaux que l'on souhaite obtenir. Cet élément permet également de diminuer la viscosité aux températures élevées.

Les alcalins agissent d'une part sur la viscosité des verres et d'autre part sur la croissance des micro-cristaux. Une faible teneur en éléments alcalins conduit à des viscosités élevées rendant plus difficile la fusion et le formage des verres. Au contraire, des teneurs trop élevées conduisent à des viscosités trop faibles et par ailleurs perturbent la croissance des micro-cristaux. La teneur en alcalin est donc avantageusement supérieure à 10 % et inférieure à 15 %. Ces éléments alcalins sont Na₂O avec une teneur comprise entre 9 et 13 % et K₂O avec une teneur comprise entre 1,5 et 2,5 %.

Outre CaO, les compositions comprennent d'autres éléments alcalino-terreux tels que BaO. Ces éléments, outre leur influence sur la viscosité, contribuent essentiellement à la formation des micro-cristaux. Plus particulièrement, CaO influe essentiellement sur la nature des cristaux et BaO influe essentiellement sur leur taille. La teneur pondérale en BaO est ainsi comprise entre 2 % et 3 %. La teneur en CaO est quant à elle inférieure à 1,5 %.

Les compositions de verre selon l'invention comportent en outre l'oxyde ZnO qui intervient également pour la formation des micro-cristaux et plus particulièrement sur le taux de croissance de ces micro-cristaux. La teneur en ZnO est ainsi comprise entre 0,5 % et 1,5 %.

Les compositions de verre selon l'invention comportent encore l'oxyde Al₂O₃ dans une teneur comprise entre 5 et 6 %. Cet oxyde intervient notamment sur la résistance chimique du verre ainsi que sur sa viscosité. De faibles teneurs nuisent par ailleurs à la croissance des micro-cristaux et diminuent la résistance chimique. Des teneurs trop élevées peuvent conduire à des viscosités trop importantes et une fusion délicate.

Les compositions de verre selon l'invention comportent encore d'autres oxydes, pouvant notamment intervenir sur la formation des micro-cristaux. Il s'agit de l'oxyde CeO₂ qui favorise notamment la germination des micro-cristaux avec des teneurs très faibles, telles que des teneurs inférieures ou égales à 1000 ppm.

Les inventeurs ont également su mettre en évidence que les compositions de verre selon l'invention pouvaient comporter une teneur non nulle en fluor pour compléter celle en P₂O₅, sans pour autant conduire à des articles présentant les inconvénients précités tels que la formation d'une pellicule grasse ou la présence d'odeurs après stockage. La teneur en fluor reste cependant inférieure ou égale à 1 %.

Précédemment, il a déjà été dit que les compositions de verre ainsi décrites selon l'invention autorisent la réalisation d'articles présentant une résistance hydrolytique suffisance ; en fait, ces verres sont assimilés à un verre de type I selon les règles de la pharmacopée européenne ou américaine USP23 - NF18. Ces règles se basent sur des mesures de la résistance hydrolytique dans la masse, notamment par la méthode sur poudre, ou en surface.

Par ailleurs, ces compositions de verre opalins conduisent à des articles présentant une transmission lumineuse globale au travers de leur paroi. Cette transmission lumineuse est fonction de la teneur en micro-cristaux dans l'épaisseur de la paroi de l'article. Elle est de préférence supérieure à 10 % et n'excède avantageusement pas 80 %. Selon les types de production, c'est-à-dire selon le type d'articles fabriqués et leurs destinations, la transmission lumineuse est avantageusement supérieure à 20 %, voire 30 %. Cette transmission lumineuse peut notamment être exprimée sous forme de colorimétrie L ou luminance, cette grandeur étant directement fonction de la transmission lumineuse. Cette grandeur L est l'une des coordonnées colorimétriques désignées par les lettres a, b, L ; a et b caractérisant la chromaticité du verre et L caractérisant la luminance de ce même verre, les coordonnées en question dérivant des coordonnées trichromatiques X, Y et Z définies et proposées en 1931 par la Commission Internationale de l'Eclairage (CIE), commission unanimement reconnue comme organisme faisant référence en matière de colorimétrie. Le système de coordonnées L, a, b communément appelé CIELAB, a fait l'objet d'une recommandation officielle CIE en 1976 (Commission Internationale de l'Eclairage, Colorimetry-Recommandations Officielles - Publication CIE n° 15-2, VIENNE 1986) et est utilisé par un grand nombre de secteurs industriels.

La mesure de coordonnées colorimétriques, L, a, b est effectuée sur une paroi d'un article. Les mesures de transmission pour déterminer les valeurs a, b, L sur la paroi sont réalisées à l'aide d'un spectromètre colorquest Interlab, sous illuminant C, observer 2°.

Concernant la fabrication des articles notamment destinés à l'industrie de la parfumerie et de la cosmétique, les méthodes utilisées pour la plupart d'entre eux sont les méthodes de fabrication usuelles dans le domaine de la fabrication des flacons et pots. Ces méthodes de fabrication sont le plus souvent automatiques : les pots et flacons sont par exemple réalisés sur des machines de type machines IS.

Toutefois, par exemple en ce qui concerne la fabrication des flacons de parfumerie, certains articles peuvent être produits de façons différentes. Lors de la réalisation d'un type de flacon, il est le plus souvent demandé que ce flacon soit réalisé à différentes échelles. En effet, une ligne de parfum est composée de plusieurs modèles qui peuvent notamment être, des extraits, des parfums, des eaux de parfums, des eaux de toilette, des échantillons, des factices, etc ... Si les parfums, les eaux de parfums, les eaux de toilette et les échantillons sont produits en grande quantité, il n'en est pas de même notamment pour les extraits et les factices. Les articles produits en grande quantité seront produits de façon automatique sur des machines du type de celles évoquées précédemment. Concernant notamment les extraits et les factices, de telles productions sont difficilement envisageables, notamment pour des raisons de coûts liés à l'adaptation des machines et/ou d'encombrement des articles rendant incompatible la fabrication de ces articles sur de telles machines. Les méthodes habituellement envisagées pour ce type d'articles sont alors qualifiées de « semi-automatiques », c'est-à-dire que la production de ces articles comporte des étapes faisant intervenir un ou plusieurs opérateurs manuels.

Plus particulièrement pour ce type de production, « semi-automatique », l'invention prévoit des compositions de verre présentant un palier de travail plus important et étant ainsi plus adaptées à une intervention manuelle lors de la fabrication des articles. En comparaison avec des compositions selon l'invention plus particulièrement destinées à une production automatique des articles, de telles compositions comportent avantageusement une teneur en silice diminuée et des teneurs en alcalins, et plus particulièrement en Na₂O, et P₂O₅ augmentés. Les variations sur les teneurs en SiO₂ et Na₂O permettent notamment d'allonger le palier de travail. Ces variations entraînent notamment une baisse des températures de fusion et d'affinage. La variation de la teneur en P₂O₅ compense essentiellement la variation de Na₂O pour maintenir le taux de formation de micro-cristaux voulu.

De préférence, en comparaison avec des compositions plus spécifiquement destinées à des fabrications automatiques, la teneur en SiO₂ est diminuée d'une valeur comprise entre 3 et 6 exprimée en unité de pourcentage et de préférence égale à 5. De la même façon, la teneur en alcalins et de préférence en Na₂O, est augmentée d'une valeur comprise entre 3 et 6 exprimée en unité de pourcentage et de préférence égale à 4.

De même encore, la teneur en P₂O₅ est augmentée d'une valeur comprise entre 1 et 3 exprimée en unité de pourcentage et de préférence égale à 1.

Une composition de verre opalin selon l'invention, plus particulièrement destinée à une réalisation automatique peut comprendre les oxydes ci-après dans les limites pondérales suivantes :

| | |
|---|---|
| SiO₂ | 65,10 % |
| Na₂O | 9,00 % |
| K₂O | 2,02 % |
| CaO | 1,05 % |
| Al₂O₃ | 5,70 % |
| BaO | 2,65 % |
| Ce₂O | 0,04 % |
| B₂O₃ | 11,26 % |
| ZnO | 0,93 % |
| F | 0,45% |
| P₂O₅ | 1,80 % |

Comme il l'a été dit précédemment, les compositions de verre opalin destinées plus particulièrement à des réalisations « semi-automatiques » comme les compositions de verre opalin destinées plus particulièrement à des réalisations « automatiques » présentent une résistance hydrolytique semblable à celle d'un verre de type I et donc satisfaisante et une transmission lumineuse supérieure à 10%.

Des essais ont été réalisés à partir de différentes compositions de verre opalin selon l'invention et sont reportés dans le tableau ci-après annexé.

Le tableau présente la composition de verre de chacun des articles réalisés ainsi que la colorimétrie L au travers d'une paroi des articles, ceux-ci ayant été découpés préalablement pour permettre la mesure.

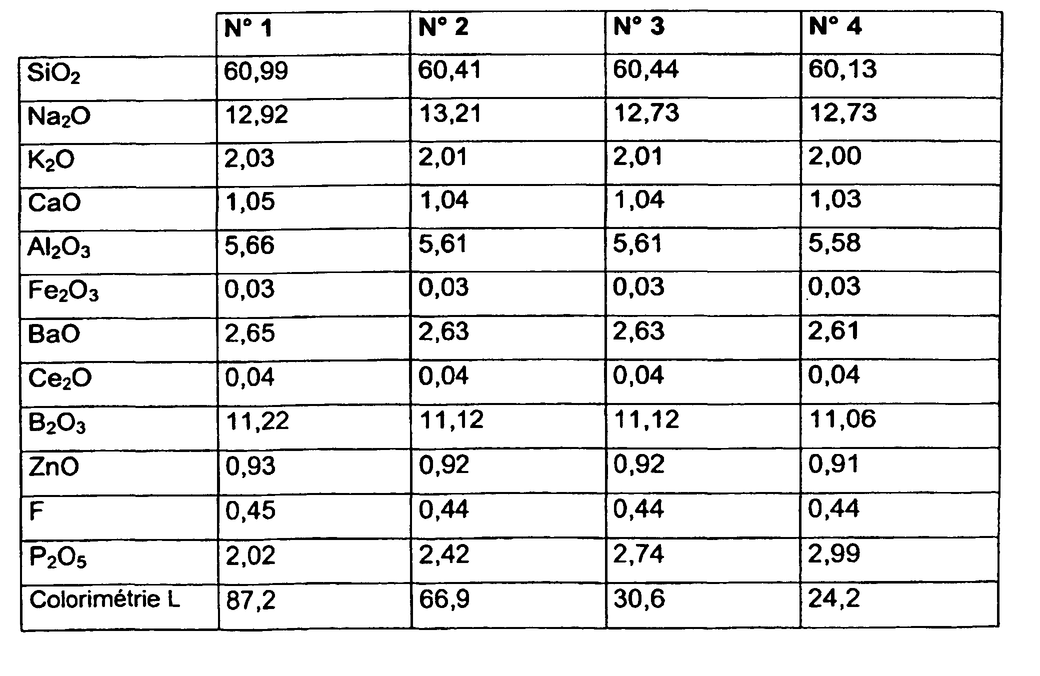

Ces essais montrent tout d'abord qu'une augmentation de la teneur en P₂O₅ conduit à une diminution de la transmission lumineuse. Les transmissions lumineuses obtenues à partir de ces compositions de verre selon l'invention sont tout à fait satisfaisantes pour les applications envisagées.

Par ailleurs, la résistance hydrolytique de chacun de ces verres est également satisfaisante, notamment pour des applications telles que celles des industries de la parfumerie et de la cosmétique.

## Revendications

1. Composition de verre opalin, du type borosilicate, **caractérisée en ce qu'**elle comprend les constituants ci-après dans les limites pondérales suivantes :
| | |
|---|---|
| SiO₂ | 60-66% |
| Na₂O | 9-13% |
| K₂O | 1,5 - 2,5 % |
| CaO | 0,5 - 1,5 % |
| Al₂O₃ | 5 - 6 % |
| BaO | 2 - 3 % |
| Ce₂O | 0 - 0,1 % |
| B₂O₃ | 10 -12 % |
| ZnO | 0,5 - 1,5 % |
| F | 0-1 % |
| P₂O₅ | 1,5 - 3 % |

2. Composition de verre selon la revendication 1 **caractérisée en ce qu'**elle comprend les constituants ci-après dans les limites pondérales suivantes :
| | |
|---|---|
| SiO₂ | 65,10 % |
| Na₂O | 9 % |
| K₂O | 2,02 % |
| CaO | 1,05 % |
| Al₂O₃ | 5,70 % |
| BaO | 2,65 % |
| Ce₂O | 0,04 % |
| B₂O₃ | 11,26 % |
| ZnO | 0,93 % |
| F | 0,45 % |
| P₂O₅ | 1,80 % |

3. Utilisation d'une composition de verre opalin définie selon l'une des revendications 1 ou 2 pour la réalisation d'articles tels que pots ou flacons, plus particulièrement destinés aux industries de la parfumerie et/ou de la cosmétique.

4. Articles obtenus selon la revendication 3, **caractérisés en ce qu'**ils présentent une résistance hydrolytique telle que celle d'un verre de type 1 selon les règles de la pharmacopée européenne ou américaine USP23 - NF 18.

5. Articles obtenus selon la revendication 3, **caractérisés en que** la transmission lumineuse globale au travers d'une paroi est comprise entre 10 et 80 %.

## Patentansprüche

1. Opalglaszusammensetzung vom Typ Borosilicat, **dadurch gekennzeichnet, dass** sie folgende Bestandteile innerhalb nachstehender Gewichtsgrenzen umfasst:
| | |
|---|---|
| SiO₂ | 60 bis 66 % |
| Na₂O | 9 bis 13 % |
| K₂O | 1,5 bis 2,5 % |
| CaO | 0,5 bis 1,5 % |
| Al₂O₃ | 5 bis 6 % |
| BaO | 2 bis 3 % |
| Ce₂O | 0 bis 0,1 % |
| B₂O₃ | 10 bis 12 % |
| ZnO | 0,5 bis 1,5 % |
| F | 0 bis 1 % |
| P₂O₅ | 1,5 bis 3 %. |

2. Glaszusammensetzung nach Anspruch 1, **dadurch gekennzeichnet, dass** sie folgende Bestandteile mit nachstehenden Gewichtsanteilen umfasst:
| | |
|---|---|
| SiO₂ | 65,10 % |
| Na₂O | 9 % |
| K₂O | 2,02 % |
| CaO | 1,05 % |
| Al₂O₃ | 5,70 % |
| BaO | 2,65 % |
| Ce₂O | 0,04 % |
| B₂O₃ | 11,26 % |
| ZnO | 0,93 % |
| F | 0,45 % |
| P₂O₅ | 1,80 %. |

3. Verwendung einer Opalglaszusammensetzung nach Anspruch 1 oder 2 zur Herstellung von Erzeugnissen wie Tiegeln oder Flakons, die insbesondere für die Parfüm- und/oder Kosmetikindustrie bestimmt sind.

4. Erzeugnisse, die nach Anspruch 3 erhalten worden sind, **dadurch gekennzeichnet, dass** sie eine Hydrolysebeständigkeit wie diejenige eines Glases vom Typ I entsprechend den Regeln der Europäischen oder der amerikanischen Pharmakopöe USP23-NF 18 besitzen.

5. Erzeugnisse, die nach Anspruch 3 erhalten worden sind, **dadurch gekennzeichnet, dass** der globale Lichttransmissionsgrad durch eine Wand 10 bis 80 % beträgt.

## Claims

1. Composition formed of opaline glass of the borosilicate type, **characterized in that** it comprises the constituents below within the following limits by weight:
| | |
|---|---|
| SiO₂ | 60-66% |
| Na₂O | 9-13% |
| K₂O | 1.5-2.5% |
| CaO | 0.5-1.5% |
| Al₂O₃ | 5-6% |
| BaO | 2-3% |
| Ce₂O | 0-0.1% |
| B₂O₃ | 10-12% |
| ZnO | 0.5-1.5% |
| F | 0-1% |
| P₂O₅ | 1.5-3% |

2. Glass composition according to Claim 1, **characterized in that** it comprises the constituents below within the following limits by weight:
| | |
|---|---|
| SiO₂ | 65.10% |
| Na₂O | 9.00% |
| K₂O | 2.02% |
| CaO | 1.05% |
| Al₂O₃ | 5.70% |
| BaO | 2.65% |
| Ce₂O | 0.04% |
| B₂O₃ | 11.26% |
| ZnO | 0.93% |
| F | 0.45% |
| P₂O₅ | 1.80% |

3. Use of an opaline glass composition defined according to either of Claims 1 and 2 for the production of articles, such as pots or bottles, intended more particularly for the fragrance and/or cosmetics industries.

4. Articles obtained according to Claim 3, **characterized in that** they exhibit a hydrolytic resistance such as that of a type I glass according to the rules of the European Pharmacopoeia or United States Pharmacopoeia USP23-NF18.

5. Articles obtained according to Claim 3, **characterized in that** the overall light transmission through a wall is between 10 and 80%.
